# EUROPEAN PATENT APPLICATION

(11) **EP 1 843 272 A2**
(43) Date of publication of application: **10.10.2007**
(21) Application number: 07105730.1
(22) Date of filing: 05.04.2007
(51) Int. Cl.: G06F 21/00, G07F 7/10

(54) **Multi-functional dongle for a portable terminal**

(30) Priority: 05.04.2006 KR 20060030804; 12.06.2006 KR 20060052308
(71) Applicant: Samsung Electronics Co., Ltd., Suwon-si, Gyeonggi-Do (KR)
(72) Inventor: Jang, Yun-Geun, Ilsandong-gu, Goyang-si, Gyeonggi-do (KR); Park, Yong-Bon, Seoul (KR); Lee, Chang-Woo, Seoul (KR); Hwang, Seon-Woong, Giheung-gu, Yongin-si, Gyeonggi-do (KR)
(74) Representative: Zimmer, Franz-Josef

(57) **Abstract**

Provided is a dongle that is connected to a portable terminal for providing a mobile banking transaction service with a banking equipment that includes a banking transaction unit for providing a mobile banking transaction service with a banking equipment; an FM transmitter for outputting a sound source played in a portable terminal through a speaker of an external FM receiver; a charger for receiving an external voltage to charge the portable terminal; and a connector to be connected to the portable terminal simultaneously or individually in order to perform functions of the banking transaction unit, the FM transmitter, and the charger. The banking transaction related components are implemented with a single separate device, i.e., dongle, and can be mounted when necessary. Therefore, a separate banking related module (software and/or hardware) is unnecessary, thereby slimming the portable terminal. In addition, the convenience of the banking transaction is improved because the dongle can be applied to general terminals having a minimum software specification.

## Description

### BACKGROUND OF THE INVENTION

### 1. Field of the Invention

The present invention relates generally to an apparatus for effectively connecting a portable terminal to an external device, and in particular, to a multi-functional dongle for a portable terminal, which is attachable and detachable to the portable terminal so that at least one of a banking transaction service, a terminal charging function, and an FM transmitter can be selectively used, thereby attributing to slimming of the portable terminal and providing convenient usage of additional functions.

### 2. Description of the Related Art

With the rapid development of electronic communication industries, portable terminals have become light, slim and small-sized and their functions have become diverse. For example, speakers that can provide melodies with various harmonies are installed in the portable terminals. Color display devices with several million pixels are also installed. In addition to a phone call function, the portable terminals provide a music play function using an MP3 player and various game contents using the display devices. Much effort has been made to further develop these functions.

Furthermore, the portable terminals now may provide mobile banking transaction services using additional components. The mobile banking transaction services are classified into two categories. According to one method, the banking transaction service is provided by a wireless communication with a banking server via a base station using a communication module of a portable terminal. According to another method, the banking transaction service is provided by a near field communication between a portable terminal and a banking equipment connected to a banking server in a wired or wireless fashion. The two methods, however, must mount a banking chip that contains user authentication and transaction history. Also, a relatively bulky antenna radiator for the near field communication, such as a loop antenna, must be separately mounted on the portable terminal.

In other words, the portable terminal performing the banking transaction must have a slot in an appropriate position in order to mount the separate banking chip. In addition, the relatively bulky antenna radiator must be mounted on the portable terminal or on a rear surface of a battery pack. These contravene the recent trend of slimming the portable terminal.

Due to the slimming of the portable terminal, an FM transmitter and/or a charger, which will be conveniently used if it is provided within the portable terminal, cannot be provided therein. Therefore, users are inconvenienced by having to carry separate devices in order to use these functions.

### SUMMARY OF THE INVENTION

An aspect of exemplary embodiments of the present invention is to substantially solve at least the above problems and/or disadvantages and to provide at least the advantages below. Accordingly, an aspect of exemplary embodiments of the present invention is to provide a multi-functional dongle for a portable terminal, attributing to slimming of the portable terminal and providing a convenient banking transaction service.

Another aspect of exemplary embodiments of the present invention is to provide a multi-functional dongle for a portable terminal, which can attribute to slimming of the portable terminal and selectively use a mobile banking transaction service and an FM transmitter.

A further aspect of exemplary embodiments of the present invention is to provide a multi-functional dongle for a portable terminal, which can attribute to slimming of the portable terminal and selectively use a mobile banking transaction service, an FM transmitter, and a charger.

A further aspect of exemplary embodiments of the present invention is to provide a multi-functional dongle for a portable terminal, which makes it possible to use a banking transaction at other terminals having no banking chip slot.

A further aspect of exemplary embodiments of the present invention is to provide a multi-functional dongle for a portable terminal, which can prevent degradation of radiation characteristic due to interference between antenna modules of the portable terminal because an antenna radiator for near field communication is provided in a separate connector, thus reducing a volume of the radiator.

The present invention provides an apparatus for a mobile banking transaction service between a portable terminal and a banking equipment. The apparatus is configured to be attachable to and detachable from an appropriate position on the portable terminal. When the apparatus is connected to the portable terminal, it performs a near field communication with the banking equipment to conduct a corresponding banking transaction.

Preferably, the present invention provides a separate banking transaction apparatus (hereinafter "dongle") that is attachable to and detachable from the portable terminal. Therefore, the user can conveniently conduct a banking transaction by connecting the dongle to a general terminal providing a corresponding software group.

More preferably, a banking chip is not embedded in the dongle. The banking chip storing personal authentication information and recent banking transaction history is implemented to be attachable and detachable using a separate slot, improving portability and security. The present invention, however, is not limited to this configuration. It is contemplated that the banking chip can be fixed to the dongle for convenience of use.

Still more preferably, the present invention provides a near field communication (NFC) device that can perform a near field communication between the dongle and the banking equipment. Examples of the near field communication device include, but is not limited to, a loop antenna radiator, a Bluetooth® (Bluetooth) antenna radiator, and an infrared port.

In addition, the present invention may include an application program for various banking transactions, and a separate memory in order to reduce a load of the portable terminal with respect to a banking transaction.

According to an aspect of exemplary embodiments of the present invention, there is provided a multi-functional dongle that is attachable to and detachable from an appropriate position of a portable terminal to provide a mobile banking transaction service with a banking equipment that includes a processor for controlling a mobile banking transaction with the banking equipment according to a user's request; a memory for storing information about the mobile banking transaction conducted by the processor and a corresponding application program; a communication module for performing a wireless communication with the banking equipment for the banking transaction; a banking chip driver for providing an interface with a banking chip selectively installed in order to provide personal authentication and recent banking transaction history to the processor according to a request of the processor; and a connector electrically connected to conduct a corresponding banking transaction with the portable terminal.

Accordingly, the user can easily conduct a banking transaction with a corresponding banking equipment if the portable terminal electrically connected to the dongle contains a universal banking transaction application in a software group.

According to another aspect of exemplary embodiments of the present invention, there is provided the dongle that can be used as an FM transmitter and a charger for the portable terminal, as well as the banking transaction service.

According to a further aspect of exemplary embodiments of the present invention, there is provided a multi-functional dongle connected to a portable terminal to provide a mobile banking transaction service with an external device that includes a banking transaction unit for providing a mobile banking transaction service with a banking equipment; an FM transmitter for outputting a sound source played in a portable terminal through a speaker of an external FM receiver; a charger for receiving an external voltage to charge the portable terminal; and a connector to be connected to the portable terminal simultaneously or individually in order to perform functions of the banking transaction unit, the FM transmitter, and the charger.

The dongle may include a power supply and a power controller. When the dongle is used as the FM transmitter, it can receive power from an external device. In addition, if necessary, the dongle can be operated by power of the portable terminal.

The dongle can also be used as a charger when it is installed between an external power supply and a portable terminal. Accordingly, various additional functions can be executed using a single portable dongle.

### BRIEF DESCRIPTION OF THE DRAWINGS

The above and other objects, features and advantages of exemplary embodiments of the present invention will become more apparent from the following detailed description when taken in conjunction with the accompanying drawings in which:
FIG. 1 is a schematic diagram illustrating a banking transaction service using a portable terminal with a dongle according to an exemplary embodiment of the present invention;
FIG. 2 is a perspective view illustrating a portable terminal with a dongle according to an exemplary embodiment of the present invention;
FIG. 3 is a perspective view illustrating a dongle according to an exemplary embodiment of the present invention;
FIG. 4 is a projection view illustrating a dongle according to an exemplary embodiment of the present invention;
FIG. 5 is a perspective view illustrating a dongle according to an exemplary embodiment of the present invention;
FIG. 6 is a block diagram illustrating a dongle for a banking transaction service according to an exemplary embodiment of the present invention; and
FIG. 7 is a block diagram illustrating a dongle used for a banking transaction service, an FM transmitter, and a charger according to an exemplary embodiment of the present invention.

### DETAILED DESCRIPTION OF THE EXEMPLARY EMBODIMENTS

Exemplary embodiments of the present invention will be described herein below with reference to the accompanying drawings. In the following description, well-known functions or constructions are not described in detail since they would obscure the invention in unnecessary detail.

A slide type terminal and a rectangular dongle will be illustrated and described. However, the present invention can also be applied to various portable multimedia terminals, e.g., a portable notebook computer, personal digital assistant (PDA), digital multimedia broadcasting (DMB) phone, and so on. The dongle can be formed in various shapes. For example, the dongle can be carried using a string as an accessory concept, so that an outer appearance of the dongle looks elegant when carried.

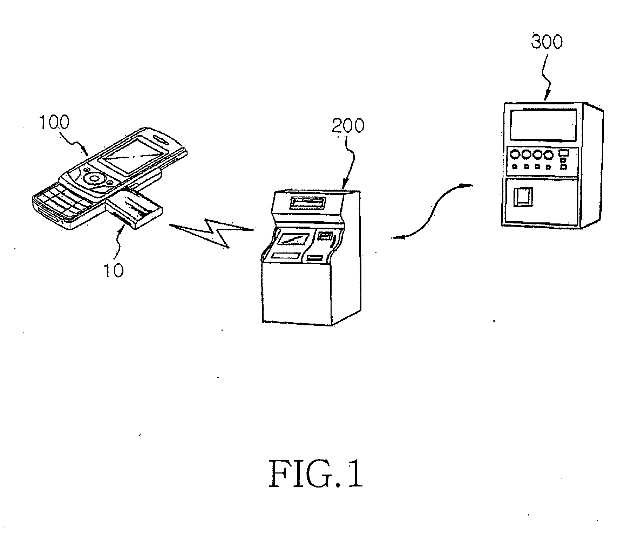

FIG. 1 is a schematic diagram of a banking transaction service using a portable terminal 100 with a dongle 10 according to an exemplary embodiment of the present invention. When the removable dongle 10 is attached to the portable terminal 100, the portable terminal 100 can perform a banking transaction through a near field communication with a banking equipment 200 that communicates with a banking server 300 of a corresponding financial agency in a wired or wireless fashion. When the banking transaction is finished, the dongle 10 is detached from the portable terminal 100 and can be separately carried or kept.

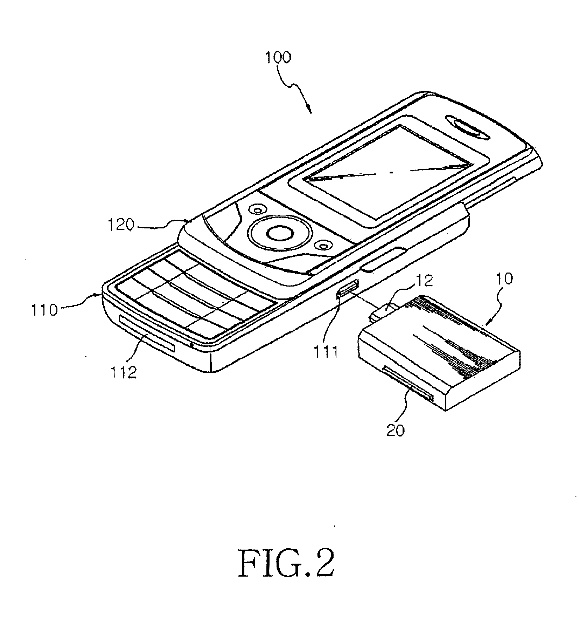

FIG. 2 is a perspective view illustrating the portable terminal 100 to which the dongle 10 is attached according to an exemplary embodiment of the present invention. In FIG. 2, a slide type terminal is illustrated as an example of the portable terminal. A basic structure of the portable terminal 100 will be omitted for conciseness. The portable terminal 100 includes a main body 110 and a slide body 120. The slide body 120 slides on the main body 110 along a longitudinal direction of the portable terminal 100. The portable dongle 10 can be attached to the portable terminal 100 in order for a banking transaction with a banking equipment.

In FIG. 2, a connector 12 of the dongle 10 is electrically connected to an ear-microphone connector port 111 of the portable terminal 100. In this case, the connector 12 may be, but is not limited to, a 10-pin connector. The connector 12 may be connected to an InterFace (IF) connector port 112 of the portable terminal 100. In this case, a 20-pin or 24-pin connector is suitable. In addition, the connector 12 may be connected to a port that is separately provided for an additional function.

Although the dongle 10 with a rectangular shape is illustrated in FIG. 2, it can also be formed in various shapes for providing user's convenience and for satisfying the purchase needs. The dongle 10 includes a removable banking chip 20. The banking chip 20 is attachable to and detachable from the dongle 10 and contains a variety of information, such as user authentication information and recent banking transaction history.

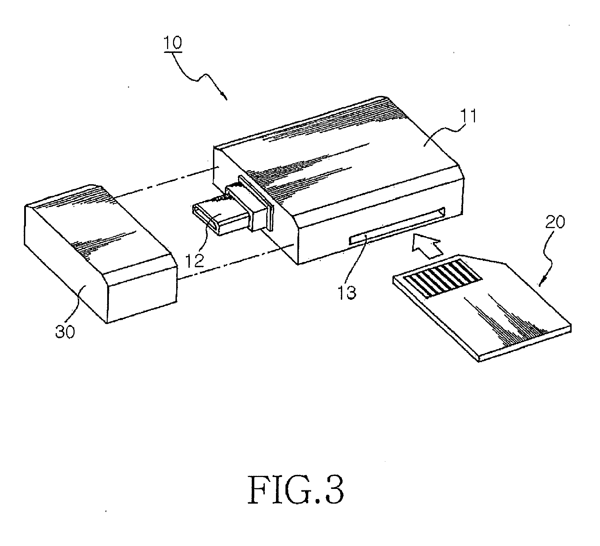

FIG 3 is a perspective view illustrating the dongle 10 according to an exemplary embodiment of the present invention. Referring to FIG. 3, the dongle 10 includes a body 11 and a connector 12 protruding from the body 11. A banking chip 20 is inserted into a slot port 13 to provide a banking transaction. When the user carries the dongle 10, for example as an accessory, without being connected to the portable terminal 100, a cover 30 can be mounted on the body 11 in order to protect the connected 12 protruding from the body 11.

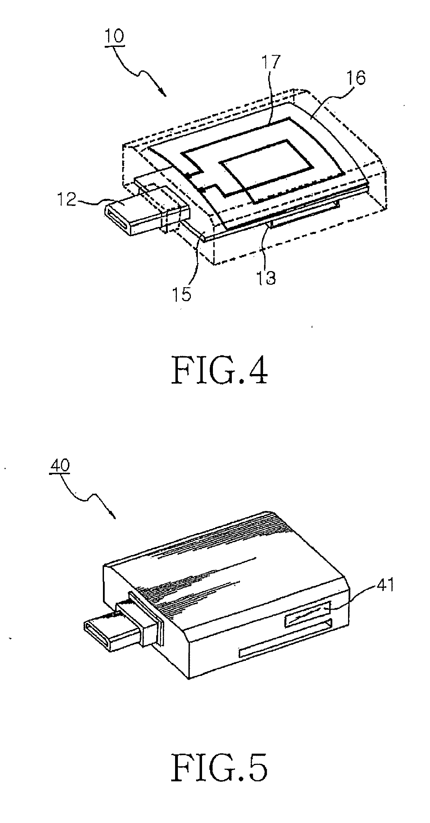

FIG. 4 is a projection view illustrating the dongle 10 according to an exemplary embodiment of the present invention.

Referring to FIG. 4, the dongle 10 includes a main board 15 and a slot port 13 to which the banking chip 20 is mounted. The slot port 13 may be mounted on the main board 15 as a Surface Mounted Device (SMD) type. In addition, the connector 12 to be connected to the portable terminal 100 can be mounted on the main board 15 in an SMD type. Although not shown, various electronic function groups can be mounted on the main board 15. That is, a processor, a memory, and a communication module, which will be described later, can be mounted on the main board 15 as a chipset type.

Meanwhile, a communication module for a Near Field Communication (NFC) between the dongle 10 and the banking equipment (120 in FIG. 1) is installed inside the body 11. The communication module may be a closed-loop antenna radiator 16 or Bluetooth antenna radiator in which predetermined metal patterns 17 are formed on a dielectric substrate. The antenna radiator 16 may be, but is not limited to, a Flexible Printed Circuit (FPC) where radiation patterns are formed. In addition, as illustrated in FIG. 5, the communication module may be another NFC device such as an infrared port (element 41 in FIG. 5) installed in an appropriate position of the body 11.

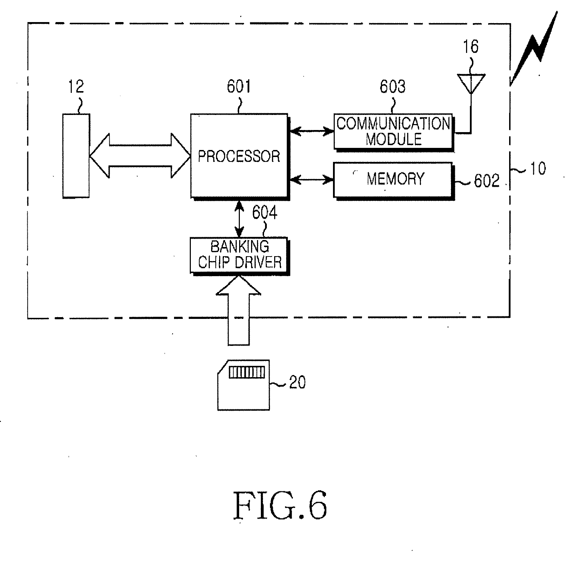

FIG. 6 is a block diagram illustrating a dongle for a banking transaction service according to an exemplary embodiment of the present invention.

Referring to FIG 6, when the portable terminal 100 is connected to the dongle 10, a processor 601 transfers a banking transaction history to be displayed in the portable terminal 100. That is, the processor 601 reads banking transaction information through an access to the banking chip 20 and transfers the read information to the portable terminal. In addition, the processor 601 can generate a banking transaction request signal desired by a user by using the banking transaction information. For example, the processor 601 can generate the banking transaction request signal according to a user's key input.

A memory 602 stores various banking transaction application programs executed in the processor 601. The memory 602 can also store information that is not stored on the banking chip 20.

A communication module 603 can control the communication devices such as an antenna radiator 16 or an infrared port (element 41 in FIG. 5) through an interface with the processor 601. Specifically, the communication module 603 transmits the banking information received via the antenna radiator 16 to the processor 601, and transfers the banking transaction request signal generated by the processor 601 to the banking equipment through the antenna radiator 16 in a wireless fashion. In the case of an antenna radiator using a Radio Frequency (RF), the communication module may be a modem having an RF module. In the case of the infrared port, the communication module may be an infrared transmitter/receiver.

A banking chip driver 604 can interface with the processor 601 when a banking chip 20 is mounted thereon.

The banking chip 20 that can be selectively connected to the dongle 10 stores information that is most important to the banking transaction. Specifically, the banking chip 20 can contain a Personal Identification Number (PIN) for user authentication, personal banking transaction information, and personal information such as social security number, etc.

An operation of the dongle 10 will be described below in detail with reference to FIGs.1 to 6.

For purpose of the banking transaction, the connector 12 of the dongle 10 is inserted into the connector port 111 of the portable terminal 100, so that the dongle 10 is electrically connected to the portable terminal 100. The portable terminal 100 immediately recognizes the insertion of the dongle 10 and automatically switches to a banking transaction mode. Various banking transaction modes displayed in the portable terminal 100 are a minimum optional specification, and the functions transmitted from the processor 601 of the dongle 10 are displayed. In this case, the portable terminal 100 provides data input via a user's key input, while various banking transaction specifications (e.g., information management of various banking transaction, authentication, etc.) that have been executed by the banking processing module of the portable terminal are controlled by the processor 601 of the dongle 10. Thus, any portable terminals having a software group of a minimum specification for banking transaction can conveniently use the corresponding banking transaction when the dongle of the present invention is applied thereto.

More preferably, when the dongle 10 is connected to the portable terminal 100, the processor 601 of the dongle 10 can immediately interface with the processor of the portable terminal and display items requiring authentication number such as user password on a display unit of the portable terminal.

When the user inputs the authentication password, the banking transaction history and its related list that are stored in the corresponding banking chip 20 can be displayed, and the user can conduct the banking transaction using the key input unit of the portable terminal 100. It is apparent that when the dongle 10 is connected to the portable terminal 100, the portable terminal 100 can perform near field communication with corresponding banking equipment through the communication module.

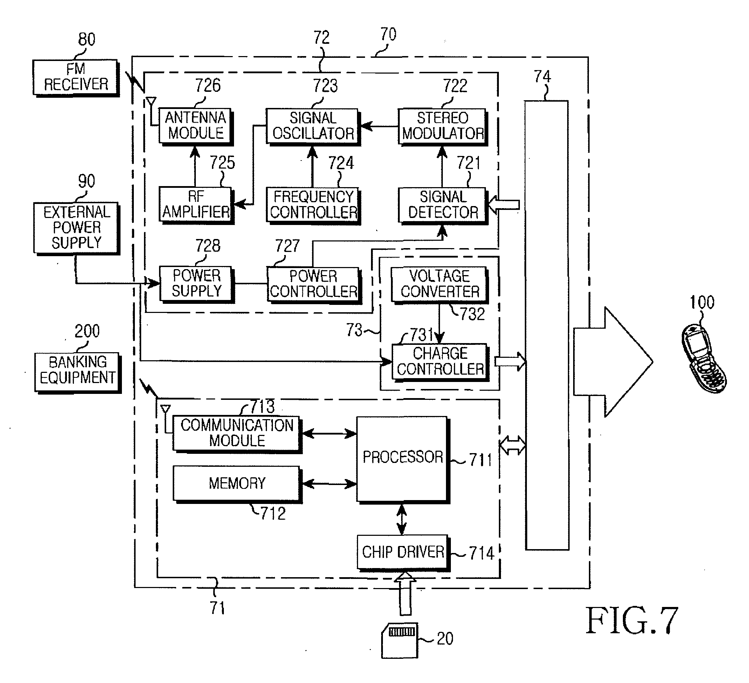

FIG. 7 is a block diagram illustrating a dongle 70 used for a banking transaction service, an FM transmitter, and a charger according to an exemplary embodiment of the present invention.

Referring to FIG. 7, a baking transaction part 71 for a banking transaction service includes a processor 711, a communication module 713, a memory 712, and a chip driver 714. Since the construction and operation of the banking transaction part 71 are the same to those described above, their detailed description will be omitted for conciseness.

An FM transmitter 72 provided in the dongle 70 includes a signal detector 721, a stereo modulator 722, a signal oscillator 723, a frequency controller 724, an RF amplifier 725, a power controller 727, and a power supply 728. A connector 74 can be commonly used. In addition, the FM transmitter 72 can include an internal antenna module 726. The internal antenna module 726 can be commonly used when internal antenna devices for the banking transaction service are used as an FM transmitter.

The signal detector 721 is connected to the portable terminal 100. When a sound source signal is input from the portable terminal 100, the signal detector 721 drives the power controller 727 to enable the power supply 728 to supply power to the FM transmitter 72. In this case, the input power of the power supply 728 is an external input power source, e.g., a cigarette jack, a household AC outlet, etc. When the power is supplied, the stereo modulator 722 FM-modulates a voice signal inputted from the signal detector 721 and provides the FM-modulated voice signal to the signal oscillator 723. The signal oscillator 723 converts the FM-modulated signal into an FM radio signal of 75 MHz to 108 MHz according to a frequency control signal and transmits the FM radio signal to the RF amplifier 725. The frequency controller 724 provides the frequency control signal to the signal oscillator 723 such that the frequency can be converted within a range of the FM radio signal. The frequency amplifier 725 amplifies the FM radio signal of 75 MHZ to 108 MHz inputted from the signal oscillator 723 and provides the amplified FM radio signal to the antenna module 726. The antenna module 726 transmits the amplified sound source signal to an FM radio receiver 80 of a vehicle in a wireless fashion and the sound source signal is outputted through a speaker of the FM receiver 80.

The charger 73 includes a charge controller 731, a switch (not shown), and a voltage converter 732. The charge controller 731 checks a voltage applied from an external power supply 90 and stabilizes it to an appropriate level. The voltage converter 732 stabilizes a power applied from a vehicle under control of the charge controller 731 and supplies the stabilized voltage to a power supply (not shown) of the portable terminal through a switching operation of the switch.

An operation of the charger 73 will now be described.

The dongle 70 is connected to the portable terminal 100 through the connector 74. Specifically, a power input port (not shown) separately provided in the dongle 70 is connected to the external power supply 90 and the dongle 70 is electrically connected to the portable terminal 100 through various types of connector ports 74. The charge controller 731 determines if the voltage applied from the external power supply 90 is stabilized. When the applied voltage is not stabilized, the charge controller 731 operates the switch (not shown) to interrupt the supply of the voltage to the portable terminal 100. The switch can be implemented with an NMOS transistor. Alternatively, when the applied voltage is stabilized, the voltage converter 732 supplies the voltage applied from the external power supply 90 to the portable terminal 100. In addition, switching the voltage converter 732 at the time when the charging of the portable terminal 100 is completed can stop the charging of the portable terminal 100 .

Because various additional functions of the portable terminal can be executed using a single dongle, users need not carry separate devices for the various functions, thereby improving the portability. Especially, the banking transaction related components are implemented with a single separate device, i.e., dongle, and can be mounted when necessary. Therefore, a separate banking related module (software and/or hardware) is unnecessary, thereby slimming the portable terminal. In addition, the convenience of the banking transaction is improved because the dongle can be applied to the general terminals having a minimum software specification.

While the invention has been shown and described with reference to certain preferred embodiments thereof, it will be understood by those skilled in the art that various changes in form and details may be made therein without departing from the scope of the invention as defined by the appended claims.

## Claims

1. A multi-functional dongle (10, 70) being connected to a portable terminal (100) for providing a mobile banking transaction service with a banking equipment(200), the multi-functional dongle comprising:
a connector (12, 74) to be electrically connected to the portable terminal;
a wireless communication module (603, 713) for communicating with the banking equipment; and
an interface for a selectively attachable banking chip (20).

2. The multi-functional dongle according to claim 1, wherein the interface is a slot port (13).

3. The multi-functional dongle of claim 1 or 2, wherein the wireless communication module (603, 713) comprises at least one of a closed-loop antenna radiator, a Bluetooth antenna radiator (16, 17), and an infrared transmitter/receiver (41).

4. The multi-functional dongle according to one of the previous claims, wherein the connector (12, 74) comprises one of an InterFace (IF) connector to be connected to an IF connector port (112) of the portable terminal (100), an ear-microphone connector (12) to be connected to an ear-microphone connector port (111) of the portable terminal, and a connector (74) to be connected to a separate port for an additional function.

5. The multi-functional dongle of claim 1, further comprising a cover (30) for protecting the connector (12).

6. The multi-functional dongle according to one of the previous claims, wherein the dongle further comprises::
a processor (601, 711) for controlling a mobile banking transaction with the banking equipment (200) according to a user's request;
a memory (602, 712) for storing information about the mobile banking transaction conducted by the processor (601, 711) and a corresponding application program;
a banking chip driver (604, 714) connected to the interface for providing personal authentication and recent banking transaction history from the banking chip to the processor, and
said connector (12, 74) electrically connected to the portable terminal (10) for conducting a corresponding banking transaction.

7. The multi-functional dongle of claim 6, wherein when the portable terminal (100) is connected to the dongle, the processor is adapted to transmit to the portable terminal the banking transaction history to be displayed, to receive a request based on a user's key input and to transmit the received request to the banking equipment (200) through the communication module.

8. A multi-functional dongle (70) being connected to a portable terminal (10) for providing a mobile banking transaction service with a banking equipment (200), the multi-functional dongle comprising:
a banking transaction part (71) for providing a mobile banking transaction service with a banking equipment (200);
an FM transmitter (73) for outputting a sound source signal played in a portable terminal (100) through a speaker of an external FM receiver (80);
a charger (73) for receiving an external voltage to charge the portable terminal; and
a connector (74) to be connected to the portable terminal for performing functions of the banking transaction unit, the FM transmitter, and the charger.

9. The multi-functional dongle of claim 8, wherein the connector (74) comprises one of an InterFace (IF) connector to be connected to an IF connector port of the portable terminal, an ear-microphone connector to be connected to an ear-microphone connector port of the portable terminal, and a connector to be connected to a separate port for an additional function.

10. The multi-functional dongle of claim 9, wherein the charger (73) comprises a power port for receiving an external power.

11. The multi-functional dongle of claim 8, wherein the banking transaction part (71) comprises:
a processor (711) for controlling a mobile banking transaction with the banking equipment (200) according to a user's request;
a memory (712) for storing information about the mobile banking transaction conducted by the processor and a corresponding application program;
a communication module (713) for performing a wireless communication with the banking equipment for the banking transaction; and
a banking chip driver (714) for providing an interface with a banking chip selectively installed for providing personal authentication and recent banking transaction history to the processor according to a request of the processor (711).

12. The multi-functional dongle of claim 11, wherein the communication module (713) comprises at least one of a closed-loop antenna radiator (16, 17), a Bluetooth antenna radiator, and an infrared transmitter/receiver (41).

13. The multi-functional dongle of claim 11, wherein when the portable terminal (100) is connected to the dongle, the processor is adapted to transmit to the portable terminal the banking transaction history to be displayed, to receive a request based on a user's key input and to transmit the received request to the banking equipment through the communication module.

14. The multi-functional dongle of claim 8, wherein the FM transmitter (72) comprises:
a signal detector (721) connected to the portable terminal (100) for receiving a sound source signal;
a stereo modulator (722) for FM-modulating a sound signal input from the signal detector (721);
a signal oscillator (723) for converting the FM-modulated sound signal into a corresponding FM radio signal according to a frequency control signal;
a frequency controller (724) for providing the frequency control signal to the signal oscillator;
an RF amplifier (725) for amplifying the FM radio signal provided from the signal oscillator; and
an antenna module (726) for transmitting the amplified FM radio signal to an external FM receiver.

15. The multi-functional dongle of claim 11, wherein the antenna module (726) may be also used as the communication module (713) of the banking transaction part (71).

16. The multi-functional dongle of claim 10, wherein the FM transmitter (72) is operated by one of a power of the portable terminal (100) and an external power (90).

17. The multi-functional dongle of claim 10, wherein the charger (73) comprises:
a charge controller (731) for checking a voltage applied from an external power supply (90) and stabilizing the applied voltage to an appropriate level; and
a voltage converter (732) having a switch and stabilizing a power applied from an external power supply under control of the charge controller and supplying the stabilized voltage to the portable terminal through a switching operation of the switch.

18. A portable terminal (100) with a multi-functional dongle (10, 70) according to one of the previous claims.
